# EUROPÄISCHE PATENTANMELDUNG

(11) **EP 3 671 170 A1**
(43) Veröffentlichungstag der Anmeldung: **24.06.2020**
(21) Anmeldenummer: 19216545.4
(22) Anmeldetag: 16.12.2019
(51) Int. Cl.: G01M 9/02, G01M 9/04

(54) **NETZANORDNUNG, STÖMUNGSKANAL MIT DER NETZANORDNUNG UND ABSTANDSHALTER**

(30) Priorität: 19.12.2018 DE 102018132872
(71) Anmelder: aem - GmbH, 80939 München (DE)
(72) Erfinder: ROMANN, Daniel, 80937 München (DE); PREIMESSER, René, 80686 München (DE); SCHOJDA, Lukas, 81673 München (DE); HEINE, Benjamin, 80687 München (DE)
(74) Vertreter: PATERIS Patentanwälte PartmbB

(57) **Zusammenfassung**

Die Erfindung betrifft eine Netzanordnung (1) mit Seilen, von denen mindestens eines ein Längsseil (2) ist und mindestens zwei jeweils ein Querseil (3) sind, die quer zu dem Längsseil (2) angeordnet sind, und mindestens einem Abstandshalter (4), der eine Aussparung aufweist, wobei das Längsseil (2) in der Aussparung eines der Abstandshalter (4) angeordnet ist, wodurch der eine Abstandshalter (4) an dem Längsseil (2) befestigt ist und zusammen mit dem Längsseil (2) einen Flügel (5) bildet, dessen Sehne (31) senkrecht zu der Längsrichtung des Längsseils (2) orientiert ist, und in Längsrichtung des Längsseils (2) eines der zwei Querseile (3) auf der einen Seite des Abstandshalters (4) und das andere der zwei Querseile (3) auf der anderen Seite des Abstandshalters (4) angeordnet sind, so dass der Abstand zwischen den zwei Querseilen (3) mittels des Abstandshalters (4) festgelegt ist.

## Beschreibung

Die Erfindung betrifft eine Netzanordnung mit mindestens einem Abstandshalter und einen Strömungskanal mit der Netzanordnung. Zudem betrifft die Erfindung den Abstandshalter.

Bei einem Strömungskanal kann es sich um eine Vorrichtung handeln, in der ein Fluid zirkuliert wird. Bei dem Strömungskanal kann es sich beispielsweise um einen Windkanal handeln, in dem Luft zirkuliert wird. Der Windkanal wird herkömmlich dazu verwendet, um aerodynamische Versuche durchzuführen. Beispielsweise kann anhand der aerodynamischen Versuche der Strömungswiderstand einer Fahrzeugkarosserie optimiert werden. Der Windkanal kann aber auch dazu verwendet werden, einen freien Fall wie bei einem Fallschirmsprung zu simulieren. Dazu tritt eine Person in eine Flugkammer des Windkanals ein, in der die Luft von unten nach oben strömt. Bei dem Strömungskanal kann es sich ebenso beispielsweise um einen Wasserkanal handeln, bei dem es denkbar ist, dass Wasser in dem Wasserkanal zirkuliert wird. Der Wasserkanal hingegen wird herkömmlich dazu verwendet, um hydrodynamische Versuche durchzuführen. Der Wasserkanal wird herkömmlich ebenso für ein Schwimmtraining insbesondere im Leistungssportbereich verwendet.

In dem Strömungskanal wird herkömmlich ein Netz verwendet, um herumfliegende oder herumschwimmende Teile aufzufangen. Zudem wird das Netz als die untere Begrenzung der Flugkammer eingesetzt, um zu verhindern, dass die Person in den Windkanal fällt. Nachteilig ist, dass das Netz einen relativ hohen Strömungswiderstand hat, der mit Verlusten der Strömung einhergeht. Zum Ausgleichen der Verluste könnte eine Antriebsleistung eines Ventilators zum Erzeugen der Strömung erhöht werden, was mit einer Erhöhung der Temperatur des Fluids einhergeht, wobei die Erhöhung der Temperatur des Fluids besonders relevant in dem Windkanal ist. Zudem ist nachteilig, dass das Netz hohe Schallemissionen verursacht. Um der Erhöhung der Temperatur entgegen zu wirken, kann das Fluid gekühlt werden, was aufwändig ist. Bei Vorsehen eines Wärmetauschers zum Kühlen des Fluids kann sich zudem der Strömungswiderstand in dem Strömungskanal weiter erhöhen, was mit weiteren Strömungsverlusten und einer weiteren Erhöhung der Temperatur des Fluids einhergeht. Zudem kann der Erhöhung der Temperatur entgegen gewirkt werden, indem der Strömungskanal in regelmäßigen Abständen abgeschaltet wird und man dem Strömungskanal es so erlaubt, sich abzukühlen.

Die Größe der Netzöffnungen des Netzes darf eine gewisse Größe nicht überschreiten, damit nur solche der Teile das Netz passieren können, die kleiner als die Größe der Netzöffnungen sind. Andererseits sollte die Größe der Netzöffnungen nicht zu klein sein, damit der Strömungswiderstand des Netzes nicht zu groß wird. Es besteht also Bedarf an einem Netz mit möglichst genau definierter Größe seiner Netzöffnungen.

Aufgabe der Erfindung ist es daher, die vorgenannten Probleme zu lösen.

Die erfindungsgemäße Netzanordnung, insbesondere für einen Strömungskanal, um in dem Strömungskanal herumfliegende oder herumschwimmende Teile aufzufangen, weist Seile, von denen mindestens eines ein Längsseil ist und mindestens zwei jeweils ein Querseil sind, die quer zu dem Längsseil angeordnet sind, und mindestens einen Abstandshalter auf, der eine Aussparung aufweist, wobei das Längsseil in der Aussparung eines der Abstandshalter angeordnet ist, wodurch der eine Abstandshalter an dem Längsseil befestigt ist und zusammen mit dem Längsseil einen Flügel bildet, dessen Sehne senkrecht zu der Längsrichtung des Längsseils orientiert ist, und in Längsrichtung des Längsseils eines der zwei Querseile auf der einen Seite des Abstandshalters und das andere der zwei Querseile auf der anderen Seite des Abstandshalters angeordnet sind, so dass der Abstand zwischen den zwei Querseilen mittels des Abstandshalters festgelegt ist.

Unter dem Flügel versteht der Fachmann beispielsweise eine Tragfläche eines Flugzeugs, einen Flügel einer Windkraftanlage, einen Flügel eines Vogels, ein Rotorblatt eines Propellers, eine Verdichterschaufel, eine Turbinenschaufel, ein Segel oder ein Steuerruder für ein Schiff. Der Flügel kann bezüglich seiner Sehne unsymmetrisch sein, wie beispielsweise bei der Tragfläche, oder der Flügel kann bezüglich seiner Sehne symmetrisch sein, wie bei dem Steuerruder. Unter dem bezüglich seiner Sehne symmetrischen Flügel wird es verstanden, wenn in einem Querschnitt, der senkrecht zu der Längsrichtung des zu dem Flügel zugehörigen Seils angeordnet ist, die Sehne immer in der Mitte zwischen beiden Außenseiten des Flügels angeordnet ist. Der Flügel hat einen geringen Strömungswiderstand, der geringer als der Strömungswiderstand des Seils ist. Zudem verursacht der Flügel geringere Schallemissionen als das Seil. Unter dem Seil wird jede Vorrichtung verstanden, mit der ein Netz gebildet werden kann, wie beispielsweise ein Draht, eine Schnur, ein Faden und/oder eine Kordel. Das Seil kann einen im Wesentlichen kreisförmigen Querschnitt haben. Dadurch, dass der Abstand zwischen den zwei Querseilen mittels des Abstandshalters festgelegt ist, kann eine Größe einer Netzöffnung der Netzanordnung in der Längsrichtung des Längsseils vorteilhaft mit einer hohen Genauigkeit bestimmt werden. Zudem ist es vorteilhaft nicht erforderlich, dass die Längsseile und die Querseile aneinander befestigt werden, um die Größe der Netzöffnung mit der hohen Genauigkeit zu bestimmen. Der Abstandshalter hat also eine Mehrfachfunktion, nämlich mit ihm ist die Größe der Netzöffnungen in der Längsrichtung des Längsseils mit der hohen Genauigkeit bestimmbar, gleichzeitig ist mit ihm der Strömungswiderstand der Netzanordnung geringer als bei einer herkömmlichen Netzanordnung ohne die Abstandshalter und zudem sind die Schallemissionen geringer als bei der herkömmlichen Netzanordnung.

Dabei ist denkbar, dass die beiden Querseile an den mindestens einen Abstandshalter anstoßen. Alternativ ist denkbar, dass ein Abstandsteil vorgesehen ist, das zwischen dem mindestens einen Abstandshalter und einem der beiden Querseile angeordnet ist, so dass der mindestens eine Abstandshalter an das Abstandsteil anstößt. Bei dem Abstandsteil kann es sich beispielsweise um eine Lochscheibe handeln.

Der Flügel weist inhärent eine Vorderkante und eine Hinterkante auf. Der Fachmann versteht unter dem Begriff Sehne eine Verbindungslinie von der Vorderkante zu der Hinterkante.

Es ist bevorzugt, dass die Netzanordnung ein weiteres der Längsseile und einen weiteren der Abstandshalter aufweist, in dessen Aussparung eines der zwei Querseile angeordnet ist, wodurch der weitere der Abstandshalter an dem einen der zwei Querseile befestigt ist, das zusammen mit dem weiteren der Abstandshalter einen weiteren der Flügel bildet, dessen Sehne senkrecht zu der Längsrichtung des einen der zwei Querseile angeordnet ist, wobei in Längsrichtung des einen der zwei Querseile eines der zwei Längsseile auf der einen Seite des weiteren der Abstandshalter und das andere der zwei Längsseile auf der anderen Seite des weiteren der Abstandshalter angeordnet ist, so dass der Abstand der zwei Längsseile mittels des weiteren der Abstandshalter festgelegt ist. Dadurch wird der Strömungswiderstand der Netzanordnung noch weiter erniedrigt, die Schallemissionen werden noch weiter erniedrigt und zudem kann die Größe der Netzöffnung in der Längsrichtung des einen der zwei Querseile vorteilhaft mit der hohen Genauigkeit bestimmt werden.

Der mindestens eine Abstandshalter ist bevorzugt verdrehbar an dem Seil befestigt. Dadurch kann sich der Abstandshalter bei einer auf ihn auftreffenden Strömung so ausrichten, dass der Abstandshalter einen sehr niedrigen Strömungswiderstand hat. In dem Fall, dass die Netzanordnung an einem unteren Ende einer Flugkammer angeordnet ist, kann sich der mindestens eine Abstandshalter zur Seite drehen, so dass eine sich in der Flugkammer befindende Person nicht auf die eher scharfe Hinterkante sondern auf die große Seitenfläche des mindestens einen Abstandshalters fallen kann. Damit ist die Verletzungsgefahr der Person sehr gering.

Alternativ ist denkbar, dass der Abstandshalter unverdrehbar an dem Längsseil und/oder an dem Quersteil befestigt ist.

Es ist zudem bevorzugt, dass der mindestens eine Abstandshalter ein erstes Längsende und ein zweites Längsende aufweist, die den zu dem mindestens einen Abstandshalter zugehörigen Flügel in seiner Spannweitenrichtung begrenzen, und der zu dem mindestens einen Abstandshalter zugehörige Flügel an dessen Hinterkante an zumindest einem der beiden Längsenden jeweils eine Fase aufweist. Besonders bevorzugt ist dabei, dass an den beiden Längsenden jeweils eine der Fasen angeordnet ist. Durch das Vorsehen der mindestens eine Fase kann vorteilhaft erreicht werden, dass zwei der Abstandshalter, die unmittelbar benachbart in der Netzanordnung angeordnet sind und bei denen einer der zwei Abstandshalter an einem der Längsseile und der andere der zwei Abstandshalter an einem der Querseile angeordnet sind, frei um das zugehörige Seil verdrehen können, ohne sich gegenseitig zu berühren.

Es ist bevorzugt, dass die Netzanordnung mindestens einen Kreuzverbinder aufweist, wobei jeder der Kreuzverbinder jeweils eines der Längsseile und jeweils eines der Querseile miteinander bezüglich deren Abstand voneinander festlegt. Besonders bevorzugt ist dabei, dass der Kreuzverbinder beweglich in Längsrichtung desjenigen Längsseils und in Längsrichtung desjenigen Querseils ist, die der Kreuzverbinder miteinander verbindet. Dadurch kann der Kreuzverbinder im Vergleich zu einem anderen Kreuzverbinder, der jeweils eines der Längsseile und eines der Querseile aneinander befestigt, einfacher montiert werden. Der Kreuzverbinder weist bevorzugt ein erstes Durchgangsloch und ein zweites Durchgangsloch auf, wobei das Längsseil und das Querseil, die der Kreuzverbinder miteinander verbindet, durch jeweils eines des ersten Durchgangslochs und des zweiten Durchgangslochs sich erstrecken.

Es ist bevorzugt, dass der mindestens eine Abstandshalter ein erstes Längsende und ein zweites Längsende aufweist, die den zu dem mindestens einen Abstandshalter zugehörigen Flügel in seiner Spannweitenrichtung begrenzen, und die Aussparung und das in der Aussparung angeordnete Seil sich von dem ersten Längsende bis zu dem zweiten Längsende erstrecken.

Die Aussparung ist bevorzugt ein Durchgangsloch. Dabei ist besonders bevorzugt, dass der mindestens eine Abstandshalter eine Öffnung aufweist, die sich von dem ersten Längsende bis zu dem zweiten Längsende erstreckt und in Kommunikation mit dem Durchgangsloch steht. Das Seil kann via die Öffnung in das Durchgangsloch eingebracht werden, so dass die Netzanordnung auch mit dem mindestens einen Abstandshalter nachträglich ausgestattet werden kann. Der mindestens eine Abstandshalter ist bevorzugt ausgehend von einer Ausgangsform des mindestens einen Abstandshalters elastisch, so dass die Öffnung so geweitet werden kann, dass das zugehörige Seil via die Öffnung in das Durchgangsloch einbringbar ist, wobei in der Ausgangsform das zugehörige Seil nicht via die Öffnung aus dem Durchgangsloch gelangen kann. Dadurch wird vorteilhaft sichergestellt, dass, wenn eine Strömung auf die Netzanordnung auftrifft, sich der mindestens eine Abstandshalter nicht löst, dadurch von der Strömung nicht mitgerissen wird und somit keine Gefahr für Personen oder Untersuchungsobjekte darstellt.

Der mindestens eine Abstandshalter weist bevorzugt ein erstes Abstandshalterteil und ein zweites Abstandshalterteil auf, die in einen Offenzustand des mindestens einen Abstandshalters bringbar sind, in dem das erste Abstandshalterteil und das zweite Abstandshalterteil voneinander in einem Abstand zueinander angeordnet sind und dadurch ein Zugang geöffnet ist, via den das Seil in das Durchgangsloch einbringbar ist, und in einen Geschlossenzustand des mindestens einen Abstandshalters bringbar sind, in dem das erste

Abstandshalterteil und das zweite Abstandshalterteil zusammengebracht sind und dadurch den mindestens einen Abstandshalter bilden und der Zugang geschlossen ist, so dass das Seil nicht via den Zugang aus dem Durchgangsloch gelangen kann. Dadurch kann die Netzanordnung mit dem mindestens einen Abstandshalter auch nachträglich ausgestattet werden.

Es ist bevorzugt, dass die Aussparung eine Nut ist. Auch hier kann die Netzanordnung mit dem mindestens einen Abstandshalter nachträglich ausgestattet werden. Dabei ist bevorzugt, dass die Vorderkante des Flügels von dem in der Nut des zu dem Flügel zugehörigen Abstandshalters angeordneten Seil gebildet ist. Dabei ist besonders bevorzugt, wenn das in der Nut angeordnete Seil einen im Wesentlichen kreisförmigen Querschnitt hat. Dadurch hat der Flügel einen besonders niedrigen Strömungswiderstand.

Der Schwerpunkt des mindestens einen Abstandshalters ist bevorzugt zwischen dem zugehörigen Seil und der Hinterkante des zugehörigen Flügels angeordnet. Dies ist besonders bevorzugt, wenn der mindestens eine Abstandshalter verdrehbar an dem Seil befestigt ist und die Netzanordnung an dem unteren Ende der Flugkammer angeordnet ist, weil sich bei einer ausgeschalteten Strömung in der Flugkammer die Hinterkante, die eher scharf ist, sich nach unten ausrichtet und somit keine Verletzungsgefahr für eine in der Flugkammer befindliche Person darstellen kann.

Es ist bevorzugt, dass die Hinterkante des Flügels in einer Richtung senkrecht zu der Längsrichtung des zugehörigen Seils eine kürze Erstreckung als der Durchmesser des zugehörigen Seils hat. Dies führt zu einem besonders niedrigen Strömungswiderstand der Netzanordnung.

Der Flügel ist bevorzugt bezüglich der Sehne symmetrisch, insbesondere ist der Flügel in einem Querschnitt, der senkrecht zu der Längsrichtung des zu dem Flügel zugehörigen Seils angeordnet ist, tropfenförmig.

Es ist zudem bevorzugt, dass der mindestens eine Abstandshalter aus Kunststoff ist. Dadurch birgt der mindestens eine Abstandshalter nur eine geringe Verletzungsgefahr oder nur eine geringe Beschädigungsgefahr für die Untersuchungsobjekte. Alternativ ist der mindestens eine Abstandshalter aus Metall. Der mindestens eine Abstandshalter aus Metall kann poliert sein, wodurch er einen besonders niedrigen Strömungswiderstand hat. Beispielsweise kann der mindestens eine Abstandshalter mittels Strangpressen, Spritzguss oder mittels rapid prototyping hergestellt sein. Wenn der Abstandshalter aus dem Kunststoff ist, eignet sich beispielsweise der Spritzguss oder das rapid prototyping. Wenn der Abstandshalter aus dem Metall ist, eignet sich beispielsweise das Strangpressen oder das rapid prototyping.

Es ist außerdem bevorzugt, dass die Hinterkante des Flügels in einer Richtung senkrecht zu der Längsrichtung desjenigen Seils, an dem der zu dem Flügel zugehörige der Abstandshalter befestigt ist, eine Erstreckung von minimal 1,0 mm hat, insbesondere eine Erstreckung von minimal 1,5 mm. Dadurch birgt der Abstandshalter nur eine geringe Verletzungsgefahr.

Es ist bevorzugt, dass jeder der Abstandshalter nur an einem der Seile befestigt ist.

Der erfindungsgemäße Strömungskanal weist die Netzanordnung auf. Bei dem Strömungskanal kann es sich um einen Windkanal oder um einen Flüssigkeitskanal handeln. Bei dem Windkanal strömt in einem Betrieb des Windkanals Luft in dem Windkanal. Dabei ist auch denkbar, dass die Luft in dem Betrieb des Windkanals zirkuliert wird. Bei dem Flüssigkeitskanal strömt in einem Betrieb des Flüssigkeitskanals Flüssigkeit, insbesondere Wasser, in dem Flüssigkeitskanal. Wenn es sich bei der Flüssigkeit um Wasser handelt, dann ist der Flüssigkeitskanal ein Wasserkanal. Dabei ist denkbar, dass die Flüssigkeit in dem Betrieb des Flüssigkeitskanals zirkuliert wird. Es ist aber auch ebenso denkbar, dass es sich bei dem Kanal um einen Fluss oder einen künstlichen Flusskanal handelt.

Der erfindungsgemäße Abstandshalter weist eine Aussparung auf, die eingerichtet ist, ein Seil aufzunehmen und dadurch den Abstandshalter an dem Seil zu befestigen, wobei der Abstandshalter zusammen mit dem Seil einen Flügel bildet, dessen Sehne senkrecht zu dem in der Aussparung aufgenommenen Seil orientiert ist, und der Abstandshalter ein erstes Längsende und ein zweites Längsende aufweist, die den zu dem mindestens einen Abstandshalter zugehörigen Flügel in seiner Spannweitenrichtung begrenzen, und der Flügel an dessen Hinterkante an zumindest einem der beiden Längsenden jeweils eine Fase aufweist. Mit dem erfindungsgemäßen Abstandshalter kann der Strömungswiderstand einer Netzanordnung, die das Seil aufweist, erniedrigt werden, die Schallemissionen können vermindert werden und gleichzeitig kann mit dem Abstandshalter die Größe von Netzöffnungen der Netzanordnung vorteilhaft mit einer hohen Genauigkeit bestimmt werden. Zudem kann aufgrund der Fase erreicht werden, dass zwei der Abstandshalter, die unmittelbar benachbart in der Netzanordnung angeordnet sind und bei denen einer der zwei Abstandshalter an einem Längsseil und der andere der zwei Abstandshalter an einem Querseile, das quer zu dem Längsseil angeordnet ist, angeordnet sind, frei um das zugehörige Seil verdrehen können, ohne sich gegenseitig zu berühren.

Es ist bevorzugt, dass der Abstandshalter ein erstes Längsende und ein zweites Längsende aufweist, die den zu dem mindestens einen Abstandshalter zugehörigen Flügel in seiner Spannweitenrichtung begrenzen, und die Aussparung und das in der Aussparung angeordnete Seil sich von dem ersten Längsende bis zu dem zweiten Längsende erstrecken. Es ist bevorzugt, dass die Aussparung ein Durchgangsloch ist. Dabei ist bevorzugt, dass der Abstandshalter eine Öffnung aufweist, die sich von dem ersten Längsende bis zu dem zweiten Längsende erstreckt und in Kommunikation mit dem Durchgangsloch steht. Dabei ist besonders bevorzugt, dass der Abstandshalter ausgehend von einer Ausgangsform des Abstandshalters elastisch ist, so dass die Öffnung so geweitet werden kann, dass das Seil via die Öffnung in das Durchgangsloch einbringbar ist, wobei in der Ausgangsform das Seil nicht via die Öffnung aus dem Durchgangsloch gelangen kann. Es ist zudem bevorzugt, dass der Abstandshalter ein erstes Abstandshalterteil und ein zweites Abstandshalterteil aufweist, die in einen Offenzustand des mindestens einen Abstandshalters bringbar sind, in dem das erste Abstandshalterteil und das zweite Abstandshalterteil voneinander in einem Abstand zueinander angeordnet sind und dadurch ein Zugang geöffnet ist, via den das Seil in das Durchgangsloch einbringbar ist, und in einen Geschlossenzustand des Abstandshalters bringbar sind, in dem das erste Abstandshalterteil und das zweite Abstandshalterteil zusammengebracht sind und dadurch den Abstandshalter bilden und der Zugang geschlossen ist, so dass das Seil nicht via den Zugang aus dem Durchgangsloch gelangen kann.

Alternativ ist bevorzugt, dass die Aussparung eine Nut ist. Dabei ist besonders bevorzugt, dass die Vorderkante des Flügels von dem in die Nut des zu dem Flügel zugehörigen Abstandshalters einzubringenden Seil gebildet ist.

Es ist bevorzugt, dass der Schwerpunkt des Abstandshalters zwischen der Aussparung und der Hinterkante des zugehörigen Flügels angeordnet ist. Die Hinterkante des Flügels hat bevorzugt in einer Richtung senkrecht zu der Längsrichtung des in die Aussparung einzubringen Seils eine kürze Erstreckung als der Durchmesser des zugehörigen Seils. Es ist bevorzugt, dass der Flügel bezüglich der Sehne symmetrisch ist, insbesondere ist der Flügel in einem Querschnitt, der senkrecht zu der Längsrichtung des zu dem Flügel zugehörigen Seils angeordnet ist, tropfenförmig. Es ist zudem bevorzugt, dass der mindestens eine Abstandshalter aus Kunststoff ist. Alternativ ist der mindestens eine Abstandshalter aus Metall. Der mindestens eine Abstandshalter aus Metall kann poliert sein. Beispielsweise kann der Abstandshalter mittels Strangpressen, Spritzguss oder mittels rapid prototyping hergestellt sein. Es ist außerdem bevorzugt, dass die Hinterkante des Flügels in einer Richtung senkrecht zu der Längsrichtung desjenigen Seils, an dem der zu dem Flügel zugehörige der Abstandshalter befestigt ist, eine Erstreckung von minimal 1,0 mm hat, insbesondere eine Erstreckung von minimal 1,5 mm.

Im Folgenden wird anhand der beigefügten schematischen Zeichnungen die Erfindung näher erläutert.
Figur 1 zeigt eine erste Netzanordnung, die nicht von einer Strömung beaufschlagt ist.
Figur 2 zeigt eine zweite Netzanordnung, die von einer Strömung beaufschlagt ist.
Figur 3 zeigt eine erste Ausführungsform eines Abstandshalters.
Figur 4 zeigt eine zweite Ausführungsform des Abstandshalters.
Figur 5 zeigt eine dritte Ausführungsform des Abstandshalters.
Figur 6 zeigt eine vierte Ausführungsform des Abstandshalters.
Figur 7 zeigt einen Windkanal mit der Netzanordnung.

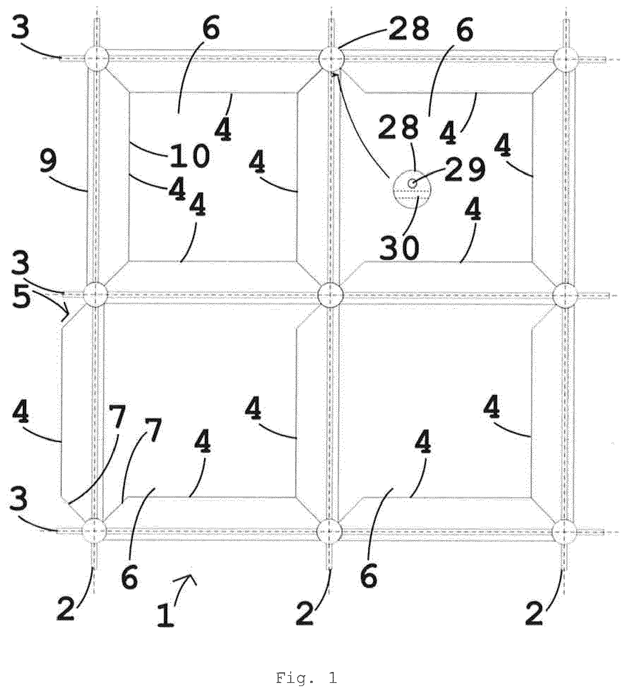

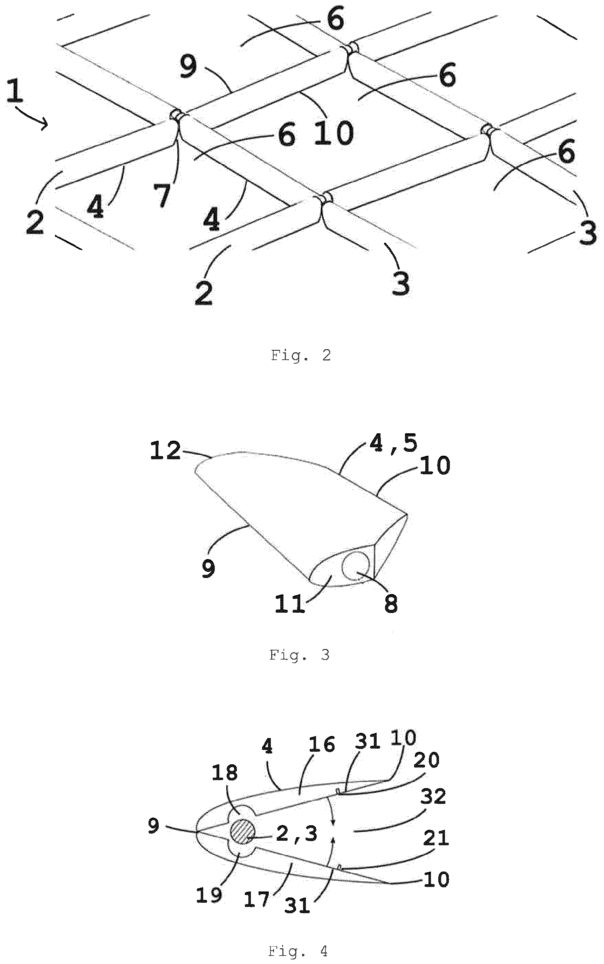

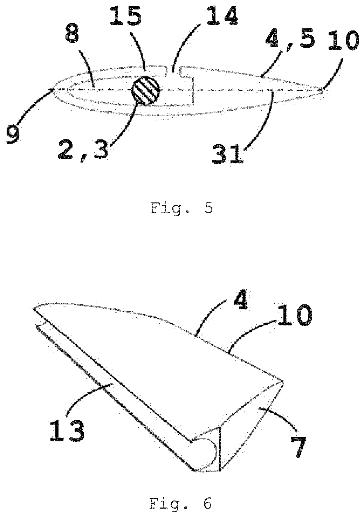

Wie es aus Figuren 1 und 2 ersichtlich ist, weist eine Netzanordnung 1 Seile auf, von denen mindestens eines ein Längsseil 2 ist und mindestens zwei jeweils ein Querseil 3 sind, die quer zu dem Längsseil 2 angeordnet sind. Unter einem Netz wird es verstanden, wenn die Netzanordnung 1 mindestens zwei der Längsseile 2 und mindestens zwei der Querseile 3 aufweist. Zudem weist die Netzanordnung 1 gemäß den Figuren 1 und 2 mindestens einen Abstandshalter 4 auf, der eine Aussparung aufweist, wobei das Längsseil 2 in der Aussparung eines der Abstandshalter 4 angeordnet ist, wodurch der eine Abstandshalter 4 an dem Längsseil 2 befestigt ist und zusammen mit dem Längsseil 2 einen Flügel 5 bildet. Der Flügel 5 weist inhärent eine Vorderkante 9, eine Hinterkante 10 und eine Sehne 31 auf, die eine Verbindungslinie von der Vorderkante 9 zu der Hinterkante 10 ist. Die Sehne 31 ist beispielhaft in Figuren 4 und 5 eingezeichnet. Die Sehne 31 ist senkrecht zu dem Längsseil 2 orientiert. In Längsrichtung des Längsseils 2 sind eines der zwei Querseile 3 auf der einen Seite des Abstandshalters 4 und das andere der zwei Querseile 3 auf der anderen Seite des Abstandshalters 4 angeordnet, so dass der Abstand zwischen den zwei Querseilen 3 mittels des Abstandshalters 4 festgelegt ist.

Zudem kann die Netzanordnung 1 gemäß Figuren 1 und 2 ein weiteres der Längsseile 2 und einen weiteren der Abstandshalter 4 aufweisen, in dessen Aussparung eines der zwei Querseile 3 angeordnet ist, wodurch der weitere der Abstandshalter 4 an dem einen der zwei Querseile 3 befestigt ist. Das eine der zwei Querseile 3 bildet zusammen mit dem weiteren der Abstandshalter 4 einen weiteren der Flügel 5, dessen Sehne 31 senkrecht zu dem einen der zwei Querseile 3 angeordnet ist. In Längsrichtung des einen der zwei Querseile 3 sind eines der zwei Längsseile 2 auf der einen Seite des weiteren der Abstandshalter 4 und das andere der zwei Längsseile 2 auf der anderen Seite des weiteren der Abstandshalter 4 angeordnet, so dass der Abstand der zwei Längsseile 2 mittels des weiteren der Abstandshalter 4 festgelegt ist.

Wie es in Figuren 1 und 2 dargestellt ist, begrenzen je zwei benachbarte der Längsseile 2 und zwei benachbarte der Querseile 3 jeweils eine Netzöffnung 6. Zudem zeigen Figuren 1 und 2 auch, dass auch an dem weiteren der Längsseile 2 einer der Abstandshalter 4 befestigt ist und zwischen den zwei Querseilen 3 angeordnet ist, so dass ein weiterer Abstand zwischen den zwei Querseilen 3 mittels einer der Abstandshalter 4 festgelegt ist. Zudem ist auch an dem anderen der zwei Querseile 3 einer der Abstandshalter 4 angebracht und zwischen den zwei Längsseilen 2 angeordnet, so dass ein weiterer Abstand zwischen den zwei Längsseilen 2 festgelegt ist. Damit ist an allen vier Seilen der Netzöffnung 6 jeweils einer der Abstandshalter 4 angeordnet und somit ist der Abstand auch an vier Seiten der Netzöffnung 6 mit der hohen Genauigkeit festgelegt.

Es ist denkbar, dass jeder der Abstandshalter 4 nur an einem der Seile befestigt ist, wie es auch in Figuren 1 und 2 dargestellt ist.

Es ist denkbar, dass alle die Längsseile 2 im Wesentlichen parallel zueinander angeordnet sind und dass alle die Querseile 3 im Wesentlichen parallel zueinander angeordnet sind, wie es auch in Figuren 1 und 2 dargestellt ist. Zudem ist denkbar, dass alle die Querseile 3 senkrecht zu den Längsseilen 2 angeordnet sind. Alternativ ist denkbar, dass alle die Querseile 3 einen von 90° verschiedenen Winkel mit den Längsseilen 2 einschließen. Alle die Seile können einen im Wesentlichen kreisförmigen Querschnitt haben. Die Abstandshalter 4 können beispielsweise aus Kunststoff und/oder aus einem Metall bestehen, wobei das Metall insbesondere poliert sein kann.

In dem Fall, dass die Netzanordnung 1 mehr als zwei der Längsseile 2 und/oder mehr als zwei der Querseile 3 aufweist, kann an jeder der Netzöffnungen 6 an all ihren vier Seiten jeweils einer der Abstandshalter 4 befestigt sein, so dass der Abstand der vier Seiten all der Netzöffnungen 6 mit der hohen Genauigkeit festgelegt ist, wie es auch in Figuren 1 und 2 dargestellt ist.

Der mindestens eine Abstandshalter 4 kann verdrehbar an dem Seil befestigt sein. Insbesondere kann der mindestens eine Abstandshalter 4 vollständig rotierbar um das Seil an dem Seil befestig sein. Figuren 1 bis 3 und 6 zeigen, dass der mindestens eine Abstandshalter 4 ein erstes Längsende 11 und ein zweites Längsende 12 aufweist, wobei das erste Längsende 11 und das zweite Längsende 12 den zu dem Abstandshalter 4 zugehörigen Flügel 5 begrenzen. Zudem weist der zu dem mindestens einen Abstandshalter 4 zugehörige Flügel 5 an dessen Hinterkante 10 an den beiden Längsenden 11, 12 jeweils eine Fase 7 auf. Die Fase 7 ist dabei so dimensioniert, dass zwei der Abstandshalter 4, die unmittelbar benachbart in der Netzanordnung 1 angeordnet sind und bei denen einer der zwei Abstandshalter 4 an einem der Längsseile 2 und der andere der zwei Abstandshalter 4 an einem der Querseile 3 angeordnet sind, frei um das zugehörige Seil verdrehen können, ohne sich gegenseitig zu berühren. Um dies zu erreichen, kann die Fase 7, beispielsweise im Falle der Netzanordnung 1, bei der alle die Querseile 3 senkrecht zu allen den Längsseilen 2 angeordnet sind, mit demjenigen der Seile, an dem der zu der Fase 7 zugehörige Abstandshalter 4 befestigt ist, einen Winkel von maximal 45° einschließen.

Figur 1 zeigt, dass die Netzanordnung 1 mindestens einen Kreuzverbinder 28 aufweist, wobei jeder der Kreuzverbinder 28 jeweils eines der Längsseile 2 und jeweils eines der Querseile 3 miteinander bezüglich deren Abstand voneinander festlegt. Der Kreuzverbinder 28 ist beweglich in Längsrichtung desjenigen Längsseils 2 und in Längsrichtung desjenigen Querseils 3, die der Kreuzverbinder 28 miteinander verbindet. Alternativ ist denkbar, dass der Kreuzverbinder 28 das Längsseil 2 und das Querseil 3 fest miteinander verbindet. Der Kreuzverbinder 28 weist ein erstes Durchgangsloch 29 und ein zweites Durchgangsloch 30 auf, wobei das Längsseil 2 und das Querseil 3, die der Kreuzverbinder 3 miteinander verbindet, durch jeweils eines des ersten Durchgangslochs 29 und des zweiten Durchgangslochs 30 sich erstrecken. Der Kreuzverbinder 28 gemäß Figur 1 wirkt als ein Abstandsteil, das zwischen dem mindestens einen Abstandshalter 4 und einem der beiden Seile angeordnet ist, deren Abstand der mindestens eine Abstandshalter 4 festlegt, so dass der mindestens eine Abstandshalter 4 an das Abstandsteil anstößt. Figur 2 zeigt eine davon verschiedene Ausführungsform der Netzanordnung 1, bei der kein mit dem Abstandsteil vergleichbares Bauteil vorgesehen ist, so dass das Querseil 3 an den mindestens einen Abstandshalter 4 anstößt.

Figur 3 zeigt eine erste Ausführungsform für den mindestens einen Abstandshalter 4, Figur 4 zeigt eine zweite Ausführungsform für den mindestens einen Abstandshalter 4, Figur 5 zeigt eine dritte Ausführungsform für den mindestens einen Abstandshalter 4 und Figur 6 zeigt eine vierte Ausführungsform für den mindestens einen Abstandshalter 4. Bei der ersten bis zur vierten Ausführungsform weist der Abstandshalter 4 ein erstes Längsende 11 und ein zweites Längsende 12 auf, wobei das erste Längsende 11 und das zweite Längsende 12 den zu dem Abstandshalter 4 zugehörigen Flügel 5 begrenzen. Die Aussparung und das in der Aussparung angeordnete Seil erstrecken sich von dem ersten Längsende 11 bis zu dem zweiten Längsende 12. Um den Strömungswiderstand zu minimieren, hat die Hinterkante 10 des zu den Abstandshaltern 4 zugehörigen Flügels 5 in einer Richtung senkrecht zu der Längsrichtung des zugehörigen Seils eine kürze Erstreckung als die Erstreckung der Aussparung in der Richtung senkrecht zu der Längsrichtung des zugehörigen Seils.

Zudem ist bei all den Ausführungsformen denkbar, dass der Schwerpunkt des mindestens einen Abstandshalters 4 zwischen der Aussparung und der Hinterkante 10 des zu dem mindestens einen Abstandshalter 4 zugehörigen Flügels 5 angeordnet ist. Der zu dem Abstandshalter 4 zugehörige Flügel 5 ist bezüglich der Sehne 31 symmetrisch und in seinem Querschnitt, der senkrecht zu der Längsrichtung des zu dem Flügel 5 zugehörigen Seils angeordnet ist, tropfenförmig. Prinzipiell ist jedoch auch denkbar, dass der Flügel 5 asymmetrisch ist. Unter dem bezüglich seiner Sehne 31 symmetrischen Flügel 5 wird es verstanden, wenn in einem Querschnitt, der senkrecht zu der Längsrichtung des zu dem Flügel 5 zugehörigen Seils angeordnet ist, die Sehne 31 immer in der Mitte zwischen beiden Außenseiten des Flügels 5 angeordnet ist. Dies ist besonders gut in Figur 4 erkennbar.

Bei der ersten bis zur dritten Ausführungsform ist die Aussparung ein Durchgangsloch 8. Das Durchgangsloch 8 kann einen kreisförmigen Querschnitt haben, so dass in dem Fall, dass die Seile ebenfalls den kreisförmigen Querschnitt haben, die Abstandshalter 4 besonders einfach verdrehbar sind. Bei der ersten Ausführungsform kann das Seil nur über die beiden Eingänge des Durchgangsloch 8 in das Durchgangsloch 8 eingebracht werden, so dass der Abstandshalter 4 gemäß der ersten Ausführungsform bereits beim Zusammenfügen der Seile auf die Seile aufgefädelt werden muss. Bei der zweiten und dritten Ausführungsform kann das Seil zusätzlich von der Seite in das Durchgangsloch 8 eingebracht werden, so dass der Abstandshalter 4 auch nach dem Zusammenfügen der Seile auf die Seile aufgebracht werden kann.

Dazu weist der Abstandshalter 4 gemäß der zweiten Ausführungsform ein erstes Abstandshalterteil 16 und ein zweites Abstandshalterteil 17 auf, die in einen Offenzustand des mindestens einen Abstandshalters 4 bringbar sind, in dem das erste Abstandshalterteil 16 und das zweite Abstandshalterteil 17 voneinander in einem Abstand zueinander angeordnet sind und dadurch ein Zugang 32 geöffnet ist, via den das Seil in das Durchgangsloch 8 einbringbar ist, und in einen Geschlossenzustand des mindestens einen Abstandshalters 4 bringbar sind, in dem das erste Abstandshalterteil 16 und das zweite Abstandshalterteil 17 zusammengebracht sind und dadurch den Abstandshalter 4 bilden und der Zugang 32 geschlossen ist, so dass das Seil nicht via den Zugang 32 aus dem Durchgangsloch 8 gelangen kann. Der Abstandshalter 4 kann, wie in Figur 4 gezeigt, einen Drehpunkt aufweisen, mittels dem das erste Abstandshalterteil 16 und das zweite Abstandshalterteil 17 drehbar miteinander gekoppelt sind. Der Drehpunkt kann, wie in Figur 4 dargestellt, an der Vorderkante 9 des an dem zu dem Abstandshalter 4 zugehörigen Flügels 5 angeordnet sein. Alternativ ist denkbar, dass der Drehpunkt an der Hinterkante 10 des an dem zu dem Abstandshalter 4 zugehörigen Flügels 5 angeordnet ist. Alternativ zu dem Abstandshalter 4 mit dem Drehpunkt kann der Abstandshalter 4 auch so beschaffen sein, dass das erste Abstandshalterteil 16 und das zweite Abstandshalterteil 17 in dem Offenzustand vollständig voneinander getrennt sind. Es ist denkbar, dass, wie in Figur 4 gezeigt, das erste Abstandshalterteil 16 eine erste Durchgangslochhälfte 18 und das zweite Abstandshalterteil 17 eine zweite Durchgangslochhälfte 19 aufweisen, wobei die erste Durchgangslochhälfte 18 und die zweite Durchgangslochhälfte 19 in dem Geschlossenzustand das Durchgangsloch 8 bilden.

Zum Befestigen des ersten Abstandshalterteils 17 an dem zweiten Abstandshalterteil 18 ist es denkbar, dass das erste Abstandshalterteil 17 einen Vorsprung 21 aufweist und das zweite Abstandshalterteil 18 eine Befestigungsaussparung 20 aufweist, wobei der Vorsprung 21 eingerichtet ist in dem Geschlossenzustand kraftschlüssig in die Befestigungsaussparung 20 einzugreifen.

Der Abstandshalter 4 gemäß der dritten Ausführungsform weist eine Öffnung 14 auf, die sich von dem ersten Längsende 11 bis zu dem zweiten Längsende 12 erstreckt und in Kommunikation mit dem Durchgangsloch 8 steht. Damit kann das Seil via die Öffnung 14 in das Durchgangsloch 8 eingebracht werden. Bei der dritten Ausführungsform ist es denkbar, dass der mindestens eine Abstandshalter 4 ausgehend von einer Ausgangsform des mindestens einen Abstandshalters 4 elastisch ist, so dass die Öffnung 14 so geweitet werden kann, dass das zugehörige Seil via die Öffnung 14 in das Durchgangsloch 8 einbringbar ist, wobei in der Ausgangsform die Öffnung so groß ist, dass das zugehörige Seil nicht via die Öffnung 14 aus dem Durchgangsloch 8 gelangen kann. Es ist auch denkbar, dass in der Ausgangsform die Öffnung 14 vollständig geschlossen ist. Der Abstandshalter 4 kann eine Klammer 15 aufweisen, die das Durchgangsloch 8 zumindest teilweise begrenzt und die den flexiblen Teil des Abstandshalters 4 bildet. Zudem ist denkbar, dass die Klammer 15 die Vorderkante 9 des zu dem Abstandshalter 4 zugehörigen Flügels 5 bildet.

Bei der vierten Ausführungsform ist die Aussparung eine Nut 13. Die Nut 13 kann einen kreisförmigen Querschnitt haben, so dass in dem Fall, dass die Seile ebenfalls den kreisförmigen Querschnitt haben, der Abstandshalter 4 besonders einfach verdrehbar ist. Bei der vierten Ausführungsform ist die Vorderkante 9 des Flügels 5 von dem in der Nut 13 des zu dem Flügel 5 zugehörigen Abstandshalters 4 angeordneten Seil gebildet.

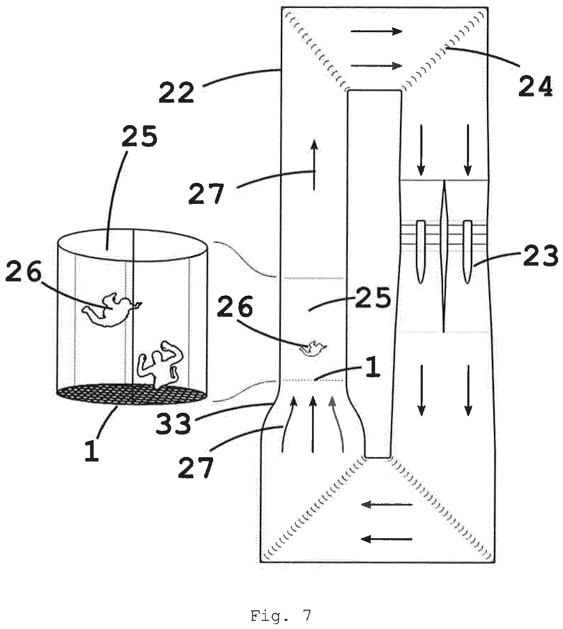

In Figur 7 ist ein Strömungskanal mit der Netzanordnung 1 dargestellt. Der Strömungskanal ist eingerichtet, mittels eines Ventilators 23 ein Fluid zu zirkulieren. Die Strömungsrichtung 27 des Fluids in dem Betrieb des Strömungskanals ist in Figur 7 mittels mehrerer Pfeile dargestellt. Zum Zirkulieren des Fluids weist der Strömungskanal mehrere Umlenkungen 24 auf. Der Strömungskanal weist eine Düse 33 auf, wobei an dem stromabwärtigen Ende der Düse 33 die Netzanordnung 1 angeordnet ist. Die Netzanordnung 1 erstreckt sich über den gesamten Querschnitt des stromabwärtigen Endes der Düse 33. An dem stromabwärtigen Ende der Düse 33 liegt in dem Betrieb die höchste Geschwindigkeit in dem gesamten Strömungskanal vor. Weil der Druckverlust proportional zum Quadrat der Geschwindigkeit ist, kann mit der erfindungsgemäßen Netzanordnung 1 besonders viel Energie zum Zirkulieren des Fluids an dieser Position eingespart werden.

Gemäß Figur 7 handelt es sich bei dem Strömungskanal und einen Windkanal 22, bei dem das Fluid Luft ist. Es ist denkbar, dass unmittelbar stromab der Düse 33 eine Flugkammer 25 angeordnet, in der die Luft von unten nach oben strömt und eine Person 26 einen freien Fall wie bei einem Fallschirmsprung simulieren kann.

### Bezugszeichenliste

- 1: Netzanordnung
- 2: Längsseil
- 3: Querseil
- 4: Abstandshalter
- 5: Flügel
- 6: Netzöffnung
- 7: Fase
- 8: Durchgangsloch
- 9: Vorderkante
- 10: Hinterkante
- 11: erstes Längsende
- 12: zweites Längsende
- 13: Nut
- 14: Öffnung
- 15: Klammer
- 16: erstes Abstandshalterteil
- 17: zweites Abstandshalterteil
- 18: erste Durchgangslochhälfte
- 19: zweite Durchgangslochhälfte
- 20: Befestigungsaussparung
- 21: Vorsprung
- 22: Windkanal
- 23: Ventilator
- 24: Umlenkung
- 25: Flugkammer
- 26: Person
- 27: Strömungsrichtung
- 28: Kreuzverbinder
- 29: erstes Durchgangsloch
- 30: zweites Durchgangsloch
- 31: Sehne
- 32: Zugang
- 33: Düse

## Patentansprüche

1. Netzanordnung (1) mit Seilen, von denen mindestens eines ein Längsseil (2) ist und mindestens zwei jeweils ein Querseil (3) sind, die quer zu dem Längsseil (2) angeordnet sind, und mindestens einem Abstandshalter (4), der eine Aussparung aufweist, wobei das Längsseil (2) in der Aussparung eines der Abstandshalter (4) angeordnet ist, wodurch der eine Abstandshalter (4) an dem Längsseil (2) befestigt ist und zusammen mit dem Längsseil (2) einen Flügel (5) bildet, dessen Sehne (31) senkrecht zu der Längsrichtung des Längsseils (2) orientiert ist, und in Längsrichtung des Längsseils (2) eines der zwei Querseile (3) auf der einen Seite des Abstandshalters (4) und das andere der zwei Querseile (3) auf der anderen Seite des Abstandshalters (4) angeordnet sind, so dass der Abstand zwischen den zwei Querseilen (3) mittels des Abstandshalters (4) festgelegt ist.

2. Netzanordnung (1) gemäß Anspruch 1, wobei die Netzanordnung (1) ein weiteres der Längsseile (2) und einen weiteren der Abstandshalter (4) aufweist, in dessen Aussparung eines der zwei Querseile (3) angeordnet ist, wodurch der weitere der Abstandshalter (4) an dem einen der zwei Querseile (3) befestigt ist, das zusammen mit dem weiteren der Abstandshalter (4) einen weiteren der Flügel (5) bildet, dessen Sehne (31) senkrecht zu der Längsrichtung des einen der zwei Querseile (3) angeordnet ist, wobei in Längsrichtung des einen der zwei Querseile (3) eines der zwei Längsseile (2) auf der einen Seite des weiteren der Abstandshalter (4) und das andere der zwei Längsseile (2) auf der anderen Seite des weiteren der Abstandshalter (4) angeordnet ist, so dass der Abstand der zwei Längsseile (2) mittels des weiteren der Abstandshalter (4) festgelegt ist.

3. Netzanordnung gemäß Anspruch 1 oder 2, wobei der mindestens eine Abstandshalter (4) verdrehbar an dem Seil befestigt ist.

4. Netzanordnung gemäß Anspruch 3, wobei der mindestens eine Abstandshalter (4) ein erstes Längsende (11) und ein zweites Längsende (12) aufweist, die den zu dem mindestens einen Abstandshalter (4) zugehörigen Flügel (5) in seiner Spannweitenrichtung begrenzen, und der zu dem mindestens einen Abstandshalter (4) zugehörige Flügel (5) an dessen Hinterkante (10) an zumindest einem der beiden Längsenden (11, 12) jeweils eine Fase (7) aufweist.

5. Netzanordnung (1) gemäß einem der Ansprüche 1 bis 4, wobei die Netzanordnung (1) mindestens einen Kreuzverbinder (28) aufweist, wobei jeder der Kreuzverbinder (28) jeweils eines der Längsseile (2) und jeweils eines der Querseile (3) miteinander bezüglich deren Abstand voneinander festlegt.

6. Netzanordnung (1) gemäß Anspruch 5, wobei der Kreuzverbinder (28) beweglich in Längsrichtung desjenigen Längsseils (2) und in Längsrichtung desjenigen Querseils (3) ist, die der Kreuzverbinder (28) miteinander verbindet.

7. Netzanordnung (1) gemäß Anspruch 5 oder 6, wobei der Kreuzverbinder (28) ein erstes Durchgangsloch (29) und ein zweites Durchgangsloch (30) aufweist, wobei das Längsseil (2) und das Querseil (3), die der Kreuzverbinder (3) miteinander verbindet, durch jeweils eines des ersten Durchgangslochs (29) und des zweiten Durchgangslochs (30) sich erstrecken.

8. Netzanordnung (1) gemäß einem der Ansprüche 1 bis 7, wobei der mindestens eine Abstandshalter (4) ein erstes Längsende (11) und ein zweites Längsende (12) aufweist, die den zu dem mindestens einen Abstandshalter (4) zugehörigen Flügel (5) in seiner Spannweitenrichtung begrenzen, und die Aussparung und das in der Aussparung angeordnete Seil sich von dem ersten Längsende (11) bis zu dem zweiten Längsende (12) erstrecken.

9. Netzanordnung (1) gemäß Anspruch 8, wobei die Aussparung ein Durchgangsloch (8) ist.

10. Netzanordnung (1) gemäß Anspruch 9, wobei der mindestens eine Abstandshalter (4) eine Öffnung (14) aufweist, die sich von dem ersten Längsende (11) bis zu dem zweiten Längsende (12) erstreckt und in Kommunikation mit dem Durchgangsloch (8) steht.

11. Netzanordnung (1) gemäß Anspruch 10, wobei der mindestens eine Abstandshalter (4) ausgehend von einer Ausgangsform des mindestens einen Abstandshalters (4) elastisch ist, so dass die Öffnung (14) so geweitet werden kann, dass das zugehörige Seil via die Öffnung (14) in das Durchgangsloch (8) einbringbar ist, wobei in der Ausgangsform das zugehörige Seil nicht via die Öffnung (14) aus dem Durchgangsloch (8) gelangen kann.

12. Netzanordnung (1) gemäß Anspruch 9, wobei der mindestens eine Abstandshalter (4) ein erstes Abstandshalterteil (16) und ein zweites Abstandshalterteil (17) aufweist, die in einen Offenzustand des mindestens einen Abstandshalters (4) bringbar sind, in dem das erste Abstandshalterteil (16) und das zweite Abstandshalterteil (17) voneinander in einem Abstand zueinander angeordnet sind und dadurch ein Zugang (32) geöffnet ist, via den das Seil in das Durchgangsloch (8) einbringbar ist, und in einen Geschlossenzustand des mindestens einen Abstandshalters (4) bringbar sind, in dem das erste Abstandshalterteil (16) und das zweite Abstandshalterteil (17) zusammengebracht sind und dadurch den mindestens einen Abstandshalter (4) bilden und der Zugang (32) geschlossen ist, so dass das Seil nicht via den Zugang (32) aus dem Durchgangsloch (8) gelangen kann.

13. Netzanordnung (1) gemäß Anspruch 8, wobei die Aussparung eine Nut (13) ist.

14. Netzanordnung (1) gemäß Anspruch 13, wobei die Vorderkante (9) des Flügels (5) von dem in der Nut (13) des zu dem Flügel (5) zugehörigen Abstandshalters (4) angeordneten Seil gebildet ist.

15. Netzanordnung (1) gemäß einem der Ansprüche 1 bis 14, wobei der Schwerpunkt des mindestens einen Abstandshalters (4) zwischen dem zugehörigen Seil und der Hinterkante (10) des zu dem mindestens einen Abstandshalter (4) zugehörigen Flügels (5) angeordnet ist.

16. Netzanordnung (1) gemäß einem der Ansprüche 1 bis 15, wobei die Hinterkante (10) des Flügels (5) in einer Richtung senkrecht zu der Längsrichtung des zugehörigen Seils eine kürze Erstreckung hat als der Durchmesser des zugehörigen Seils.

17. Netzanordnung (1) gemäß einem der Ansprüche 1 bis 16, wobei der Flügel (5) bezüglich der Sehne (31) symmetrisch ist, insbesondere ist der Flügel (5) in einem Querschnitt, der senkrecht zu der Längsrichtung des zu dem Flügel (5) zugehörigen Seils angeordnet ist, tropfenförmig.

18. Strömungskanal mit einer Netzanordnung (1) gemäß einem der Ansprüche 1 bis 17.

19. Abstandshalter (4) mit einer Aussparung, die eingerichtet ist, ein Seil aufzunehmen und dadurch den Abstandshalter (4) an dem Seil zu befestigen, wobei der Abstandshalter (4) zusammen mit dem Seil einen Flügel (5) bildet, dessen Sehne (31) senkrecht zu dem in der Aussparung aufgenommenen Seil orientiert ist, und der Abstandshalter (4) ein erstes Längsende (11) und ein zweites Längsende (12) aufweist, die den zu dem mindestens einen Abstandshalter (4) zugehörigen Flügel (5) in seiner Spannweitenrichtung begrenzen, und die Aussparung sich von dem ersten Längsende (11) bis zu dem zweiten Längsende (12) erstreckt und der Flügel (5) an dessen Hinterkante (10) an zumindest einem der beiden Längsenden (11, 12) jeweils eine Fase (7) aufweist.
